Europäisches Patentamt

(19) European Patent Office

Office européen des brevets

(11) Numéro de publication: **0 076 268**
**B1**

(12) # FASCICULE DE BREVET EUROPEEN

(45) Date de publication du fascicule du brevet:
12.06.85

(51) Int. Cl.⁴: **B 25 J 5/04**

(21) Numéro de dépôt: **82900807.7**

(22) Date de dépôt: **09.03.82**

(86) Numéro de dépôt international:
**PCT/FR 82/00041**

(87) Numéro de publication internationale:
**WO 82/03044 (16.09.82 Gazette 82/22)**

(54) **MANIPULATEUR AUTOMATIQUE.**

(30) Priorité: **10.03.81 FR 8104747**

(43) Date de publication de la demande:
**13.04.83 Bulletin 83/15**

(45) Mention de la délivrance du brevet:
**12.06.85 Bulletin 85/24**

(84) Etats contractants désignés:
**CH DE GB LI SE**

(56) Documents cités:
**DE - A - 2 930 006**
**FR - A - 2 020 183**
**FR - E - 74 850**
**US - A - 2 792 953**
**US - A - 2 822 094**

**Proceedings of the 4th International Symposium on Industrial Robots, 19-21 novembre 1974, Japan Industrial Robot Association (Tokyo, JP), L. Caprioglio "The deltix spot welding robot in the automotive industry", page 510 Proceedings of the 10th Conference on hot Laboratories and Equipment, 26-28 novembre 1962, American Nuclear Society (Chicago, US), C.L. Hunt et al.: "The beetle, a mobile shielded cab with manipulators", page 169**

(73) Titulaire: **SORMEL Société anonyme dite:, Rue Becquerel Z.I. de Chateaufarine, F-25009 Besançon (FR)**

(72) Inventeur: **PETITEAU, Maurice René, 7, rue Sancey, F-25000 Besançon (FR)**

(74) Mandataire: **Bonnetat, Christian et al, Cabinet PROPI Conseils 23 rue de Léningrad, F-75008 Paris (FR)**

## Description

La présente invention concerne un manipulateur précis, pouvant être programmé et plus particulièrement adapté au procédé d'assemblage dans le domaine des produits de petits et moyens volumes.

On connaît déjà, par le document US-A N° 2792953, un manipulateur comportant un bâti par rapport auquel peuvent coulisser, sous l'action d'actuateurs (vérins) et dans les deux sens de ceux directions différentes, deux organes mobiles, l'un de ceux-ci présentant la structure d'un cadre pouvant coulisser dans son plan par rapport audit bâti et l'autre étant monté à l'intérieur dudit cadre pour pouvoir coulisser par rapport à celui-ci parallèlement à son plan.

La présente invention a pour objet de perfectionner un tel manipulateur connu afin de diminuer autant que possible l'inertie de ses parties mobiles, d'accroître sa vitesse de fonctionnement et de lui conférer une grande rigidité nécessitée par des performances élevées.

A cette fin, selon l'invention, le manipulateur du type comportant un bâti par rapport auquel peuvent coulisser, sous l'action d'actuateurs et dans les deux sens de deux directions différentes, deux organes mobiles, au moins l'un desdits organes mobiles présentant la structure d'un cadre pouvant coulisser dans son plan par rapport audit bâti et l'autre organe mobile étant monté à l'intérieur dudit cadre pour pouvoir coulisser par rapport à celui-ci parallèlement à son plan, manipulateur dans lequel lesdits actuateurs sont montés à poste fixe sur le bâti, le mouvement est transmis aux organes mobiles par l'intermédiaire de moyens de transmission et lesdits moyens de transmission associés à l'organe mobile intérieur au cadre comportent un élément coulissant, est caractérisé en ce que les moyens de transmission associés à l'organe mobile intérieur comportent un arbre entraîné en rotation par rapport auquel peut coulisser une poulie, solidaire en rotation dudit arbre et en ce que le mouvement de cet organe mobile intérieur est prélevé sur ladite poulie.

Ainsi, on diminue au maximum l'inertie du manipulateur, puisque les actuateurs peuvent être montés à poste fixe sur le bâti.

Avantageusement, une pluralité d'outils sont embarqués sur l'organe mobile intérieur. A cet effet, l'organe mobile intérieur au cadre peut présenter lui-même la forme d'un cadre, de façon que l'on puisse passer des organes mobiles à travers lui.

De façon connue, une transmission peut être prévue entre l'organe mobile extérieur en forme de cadre et l'actuateur correspondant. Il est particulièrement avantageux que les moyens de transmission associés aux deux organes mobiles soient du type à courroie et poulie.

Eventuellement, on peut rendre mobile le bâti, par exemple dans une direction orthogonale aux directions de déplacement desdits organes mobiles. On obtient ainsi un manipulateur XYZ.

On voit ainsi que le dispositif selon la présente invention permet:

— l'embarquement de n outils de préhension, de manipulation, de soudure, etc.;

— la réalisation d'un seul aller et retour au lieu de plusieurs;

— l'inutilité de temps supplémentaire pour l'utilisation d'un autre outil déjà embarqué;

— l'allégement au maximum des parties mobiles, puisque les actuateurs se trouvent à poste fixe;

— une grande rigidité, du fait de la structure à cadres emboîtés qui peuvent constituer une structure en portique déporté.

Une telle structure est par exemple obtenue en montant l'ensemble du bâti et des deux cadres mobiles sur des colonnes, ce qui confère au manipulateur selon l'invention une très grande rigidité compatible avec les objectifs de précision exigés par les applications envisagées dans le domaine de la micromécanique.

Les figures du dessin annexé feront bien comprendre comment l'invention peut être réalisée.

La fig. 1 est une vue en perspective schématique partielle du manipulateur selon l'invention.

La fig. 2 montre en perspective le cadre intérieur et son dispositif d'entraînement.

La fig. 3 est une coupe selon la ligne III-III de la fig. 2.

La fig. 4 montre en perspective le cadre extérieur et son dispositif d'entraînement.

La fig. 5 montre en perspective l'agencement des cadres intérieur et extérieur et leurs dispositifs d'entraînement.

Sur ces figures, des références identiques désignent des éléments semblables.

Le manipulateur selon l'invention, montré par ces figures, comporte un bâti rigide 1, par exemple en forme de parallélépipède. Ce bâti 1 est monté sur des colonnes 2, par exemple de longueur variable de façon commandée, de sorte que l'ensemble du bâti 1 et des colonnes 2 forme un portique déporté. A cet effet, les colonnes 2 se trouvent à une même extrémité du bâti 1.

A l'intérieur du bâti 1 se trouve un évidement 3, dans lequel peut se déplacer en coulissement un premier cadre extérieur 4.

A l'intérieur du cadre 4 peut se déplacer un cadre intérieur 5. Les déplacements du cadre 4 (flèches F1) et du cadre 5 (flèches F2) sont orthogonaux.

Par ailleurs, le bâti 1 comporte un compartiment 6 dans lequel sont logés les actuateurs des cadres 4 et 5, par exemple des moteurs électriques 7 et 8.

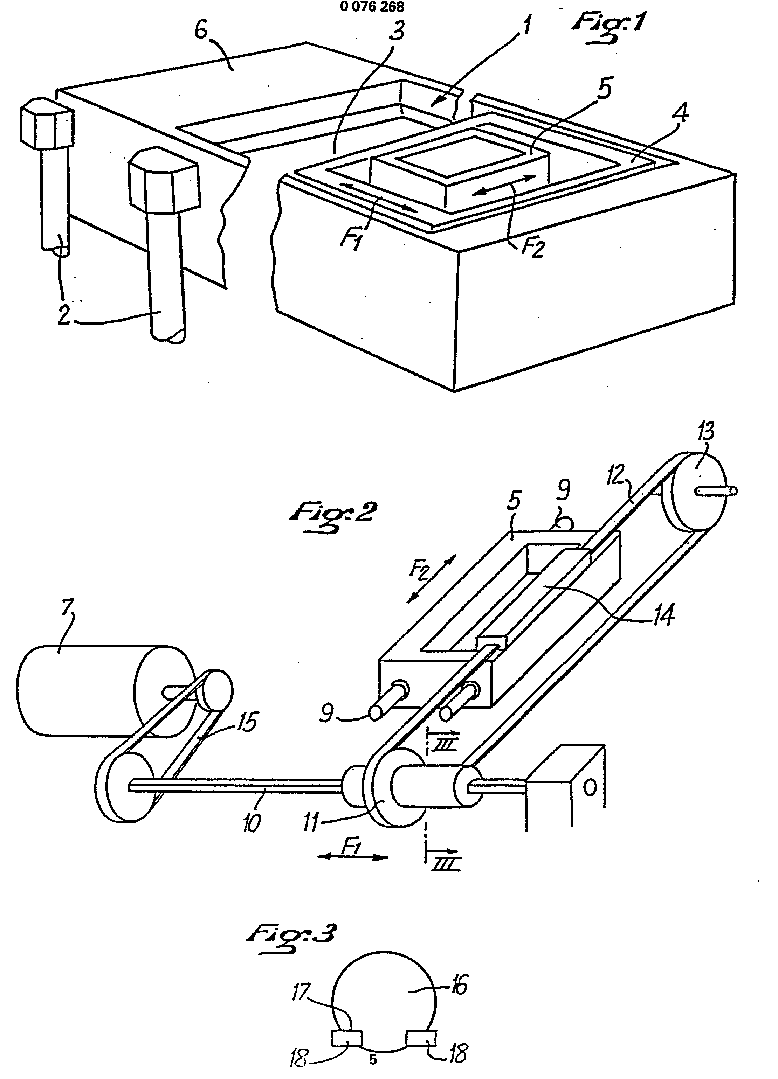

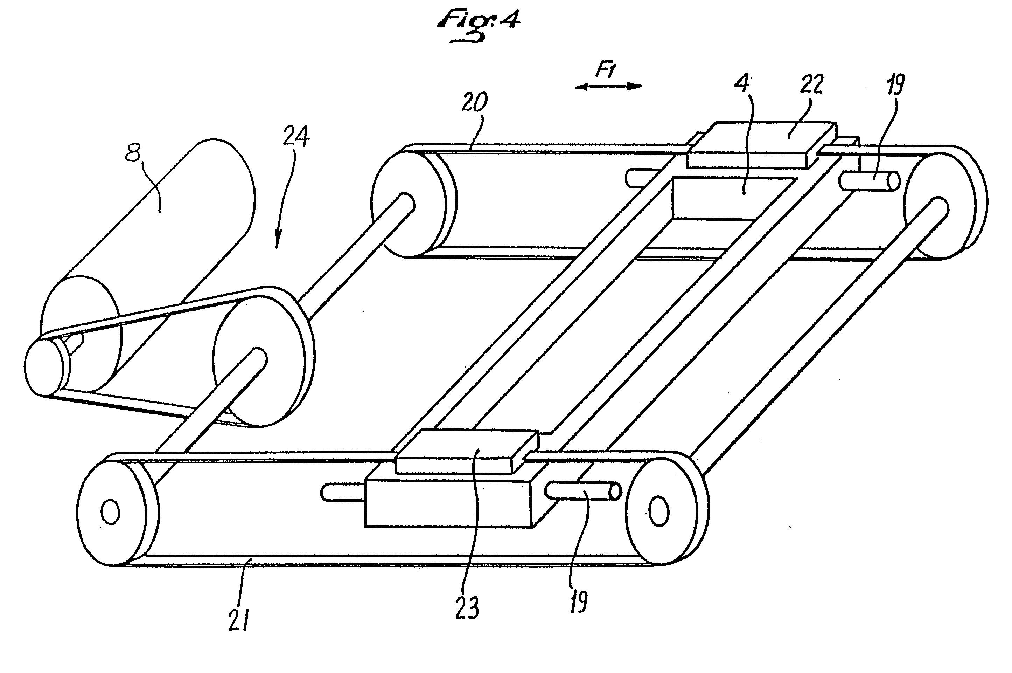

Comme le montre la fig. 2, le cadre intérieur 5 est monté coulissant par rapport au cadre extérieur 4, au moyen de rails 9 solidaires de celui-ci.

Le moteur 7 entraîne en rotation une barre 10, par exemple de section carrée, sur laquelle peut coulisser, tout en étant solidaire en rotation de ladite barre 10, une poulie 11.

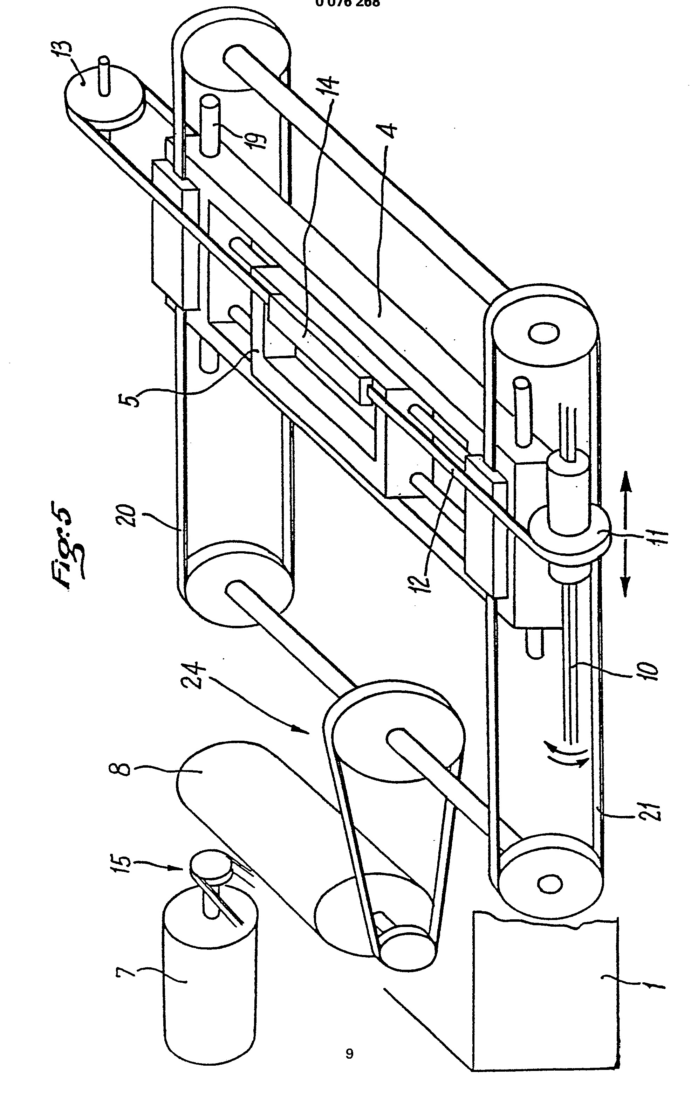

Sur cette poulie 11 passe une courroie 12, par exemple crantée, fixée au cadre 5 et passant sur une poulie de renvoi 13. La fixation de la courroie 12 au cadre 5 est effectuée en 14. De plus, la transmission du mouvement du moteur 7 à la barre 10 est obtenue par l'intermédiaire d'un système à poulie et courroie 15. Dans une variante de réalisation illustrée sur la fig. 3, au lieu de présenter une section carrée, la barre 10 peut présenter une section circulaire 16 comportant des méplats 17 avec lesquels coopèrent des taquets ou roulements 18 solidaires de la poulie 11. Eventuellement, la barre 10 peut servir de coulisse au cadre 4, par l'intermédiaire de la poulie 11, qui est alors reliée audit cadre par un palier (non représenté).

On conçoit donc que le moteur 7, étant à poste fixe dans le compartiment 6, puisse entraîner le cadre 5 alternativement en translation selon les flèches F2 alors que la poulie 11 peut se déplacer selon les flèches F1, pour tenir compte des déplacements du cadre extérieur 4.

Comme le montre la fig. 4, ce cadre extérieur 4 est monté coulissant sur le bâti 1 au moyen de rails 19. Le moteur 8, logé dans le compartiment 6, entraîne le cadre intérieur 4 dans des mouvements selon les flèches F1 grâce à une transmission par courroies 20 et 21, fixées en 22 et 23 sur le cadre extérieur 4 et elles-mêmes entraînées par l'intermédiaire d'un système à poulie et courroie 24.

La fig. 5 montre les différents éléments des fig. 2 et 4 imbriqués l'un dans l'autre.

Les différentes poulies et courroies utilisées peuvent être crantées, afin d'éviter tout glissement. De plus, on peut prévoir des systèmes de fixation des courroies sur les différents organes mobiles permettant de modifier l'un au moins des points d'accrochage pour contrôler la tension desdites courroies.

Dans le cas d'utilisation de moteurs 7 et 8 du type pas-à-pas, on peut prévoir un dispositif d'initialisation permettant de corriger d'éventuelles pertes de pas au cours du fonctionnement.

A chaque mise sous tension ou chaque fois qu'un des signaux de fin de course du manipulateur n'est pas actionné, le dispositif peut aller se recaler sur les zéros des axes de coulissement des cadres 4 et 5.

Eventuellement, les longueurs des colonnes 2 peuvent être commandées pour donner une direction supplémentaire d'ajustement au manipulateur selon l'invention.


## Revendications

1. Manipulateur du type comportant un bâti par rapport auquel peuvent coulisser, sous l'action d'actuateurs, et dans les deux sens de deux directions différentes deux organes mobiles, au moins l'un desdits organes mobiles (4) présentant la structure d'un cadre pouvant coulisser dans son plan par rapport audit bâti (1) et l'autre organe mobile (5) étant monté à l'intérieur dudit cadre (4) pour pouvoir coulisser par rapport à celui-ci parallèlement à son plan, manipulateur dans lequel lesdits actuateurs (7, 8) sont montés à poste fixe (6) sur le bâti (1), le mouvement est transmis aux organes mobiles (4, 5) par l'intermédiaire de moyens de transmission et lesdits moyens de transmission associés à l'organe mobile intérieur au cadre comportent un élément coulissant, caractérisé en ce que les moyens de transmission associés à l'organe mobile intérieur (5) comportent un arbre (10) entraîné en rotation par rapport auquel peut coulisser une poulie (11) solidaire en rotation dudit arbre (10) et en ce que le mouvement de cet organe mobile intérieur (5) est prélevé sur ladite poulie (11).

2. Manipulateur selon la revendication 1, dans lequel une transmission est prévue entre l'organe mobile extérieur en forme de cadre et l'actuateur (8) correspondant, caractérisé en ce que les moyens de transmission associés aux deux organes mobiles sont du type à courroie et poulie.

3. Manipulateur selon l'une des revendications 1 ou 2, caractérisé en ce que le bâti (1) est rendu mobile.

4. Manipulateur selon l'une des revendications 1 à 3, caractérisé en ce que le bâti est monté sur des colonnes (2) pour former une structure en portique déporté.

5. Manipulateur selon les revendications 3 et 4, caractérisé en ce que la longueur desdites colonnes (2) est variable de façon commandée.

6. Manipulateur selon l'une des revendications 1 à 5, caractérisé en ce qu'une pluralité d'outils sont embarqués sur l'organe mobile intérieur.


## Patentansprüche

1. Verschieber oder Manipulator mit einem Gestell, dem gegenüber in beide von zwei verschiedenen Richtungen unter der Einwirkung von Stellgliedern zwei bewegliche Glieder verschiebbar sind, von denen zumindest eines (4) den Aufbau eines Rahmens aufweist, der in seiner Ebene gegenüber dem Gestell verschoben werden kann, und das andere (5) im Innern des Rahmens (4) eingesetzt ist, um diesem gegenüber parallel zu seiner Ebene verschoben werden zu können, wobei bei diesem Verschieber, in dem die Stellglieder (7, 8) stationär auf dem Gestell (1) befestigt sind, die Bewegung an die Glieder (4, 5) mittels einer Übertragungseinrichtung übertragen wird und die Übertragungseinrichtung mit dem beweglichen Glied innerhalb des Rahmens verbunden ist und ein verschiebendes Teil aufweist, dadurch gekennzeichnet, dass die mit dem inneren beweglichen Teil (5) verbundene Übertragungseinrichtung eine drehbar angetriebene Welle (10) aufweist, der gegenüber eine Riemenscheibe (11) verschiebbar ist, die drehfest mit der Welle (10) verbunden ist, und dass die Bewegung des beweglichen inneren Teils (5) an der Scheibe (11) abgenommen wird.

2. Verschieber nach Anspruch 1, in dem eine Übertragung zwischen dem beweglichen, als Rahmen ausgebildeten äusseren Teil und dem entsprechenden Stellglied (8) vorgesehen ist, dadurch gekennzeichnet, dass die mit beiden beweglichen Teilen verbundene Übertragungseinrichtung als Treibriemen und Riemenscheibe ausgebildet ist.

3. Verschieber nach einem der Ansprüche 1 oder 2, dadurch gekennzeichnet, dass das Gestell (1) beweglich gehalten ist.

4. Verschieber nach einem der vorhergehenden Ansprüche, dadurch gekennzeichnet, dass das Gestell auf zwei Säulen (2) befestigt ist, um einen als seitlichen Portalrahmen ausgebildeten Aufbau zu bilden.

5. Verschieber nach den Ansprüchen 3 und 4, dadurch gekennzeichnet, dass die Länge der Säulen (2) zwangsschlüssig veränderlich ist.

6. Verschieber nach einem der Ansprüche 1 bis 5, dadurch gekennzeichnet, dass mehrere Werkzeuge auf das bewegliche innere Teil (5) eingebracht sind.

## Claims

1. Manipulator of the type comprising a framework with respect to which two mobile members may slide, under the action of actuators, and to and fro in two different directions, at least one of said mobile members (4) presenting the structure of a frame adapted to slide in its plane with respect to said framework (1) and the other mobile member (5) being mounted inside said frame (4) to be able to slide with respect thereto parallel to its plane, manipulator in which said actuators (7, 8) are mounted to be stationary (6) on the framework (1), the movement is transmitted to the mobile members (4, 5) *via* transmission means and said transmission means associated with the mobile member inside the frame comprise a sliding element, characterized in that the transmission means associated with the inner mobile member (5) comprise a shaft (10) driven in rotation with respect to which a pulley (11) fast in rotation with said shaft (10) may slide, and in that the movement of this inner mobile member (5) is taken on said pulley (11).

2. Manipulator according to Claim 1, in which a transmission is provided between the outer mobile member in the form of a frame and the corresponding actuator (8), characterized in that the transmission means associated with the two mobile members are of the belt and pulley type.

3. Manipulator according to one of Claims 1 or 2, characterized in that the frame (1) is rendered mobile.

4. Manipulator according to one of Claims 1 to 3, characterized in that the frame is mounted on columns (2) to form an offset gantry structure.

5. Manipulator according to Claims 3 and 4, characterized in that the length of said columns (2) is variable in controlled manner.

6. Manipulator according to one of Claims 1 to 5, characterized in that a plurality of tools are embarked on the inner mobile member.

0 076 268

Fig. 1

Fig. 2

Fig. 3

Fig. 4

Fig:5

0 076 268